(19) Europäisches Patentamt

European Patent Office

Office européen des brevets

(11) **EP 1 274 909 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(21) Anmeldenummer: **01929313.3**

(22) Anmeldetag: **05.04.2001**

(51) Int Cl.⁷: **E05B 49/00**, B60R 25/00

(86) Internationale Anmeldenummer:
**PCT/DE2001/001316**

(87) Internationale Veröffentlichungsnummer:
**WO 2001/077468 (18.10.2001 Gazette 2001/42)**

(54) **SYSTEM ZUR KONTROLLE DER ZUGANGSBERECHTIGUNG ZU EINEM FAHRZEUG**

SYSTEM FOR CONTROLLING RIGHT OF ACCESS TO A VEHICLE

SYSTEME POUR CONTROLER L'AUTORISATION D'ACCES A UN VEHICULE

(84) Benannte Vertragsstaaten:
**DE FR GB IT**

(30) Priorität: **11.04.2000 DE 10017973**

(43) Veröffentlichungstag der Anmeldung:
**15.01.2003 Patentblatt 2003/03**

(73) Patentinhaber: **ROBERT BOSCH GMBH**
**70442 Stuttgart (DE)**

(72) Erfinder: **HOETZEL, Juergen**
**61197 Florstadt (DE)**

(56) Entgegenhaltungen:
EP-A- 0 523 602          EP-A- 0 580 139
EP-A- 0 992 408          DE-C- 19 718 764
DE-C- 19 728 761          DE-C- 19 811 572
FR-A- 2 767 765          US-A- 5 499 022

• US 4763121 A
• US 5723 911 A

**Beschreibung**

Stand der Technik

Die Erfindung betrifft ein System zur Kontrolle der Zugangsberechtigung zu einem Fahrzeug mit einer fahrzeugbasierten Sende-/Empfangseinheit, die mindestens zwei voneinander beabstandete Sende-/Empfangsantennen am oder im Fahrzeug aufweist, und mit_einer Transpondereinheit, die zur Detektion ihres Vorhandenseins und zum Austausch einer vorbestimmten Kennungsaufforderung/Antwortsequenz durch die bzw. mit der Sende-/Empfangseinheit innerhalb eines vorbestimmten Detektionsbereichs in dem bzw. um das Fahrzeug eingerichtet ist, wobei die Sende-/Empfangseinheit Berechnungs-/Auswertemittel aufweist, die die Detektion einer Position der Transpondereinheit mittels eines mathematisch-geometrischen Verfahrens in Reaktion auf ein von den mindestens zwei Sende-/Empfangsantennen auf die Kennungsaufforderung hin empfangenen, von der Transpondereinheit ausgesendeteten Antwortsignal durchführen.

Ein derartiges, auch als Passive-Entry-System bezeichnetes Zugangsberechtigungskontrollsystem ist aus der US-A-5 723 911 bekannt und wird von verschiedenen Anbietern angeboten. Es arbeitet bidirektional und bestimmt die Position der für ein Fahrzeug zugelassenen bzw. autorisierten Personen durch die Erfassung eines Transpondersignals auf die Interaktion mit diesem innerhalb eines gültigen Detektionsbereichs.

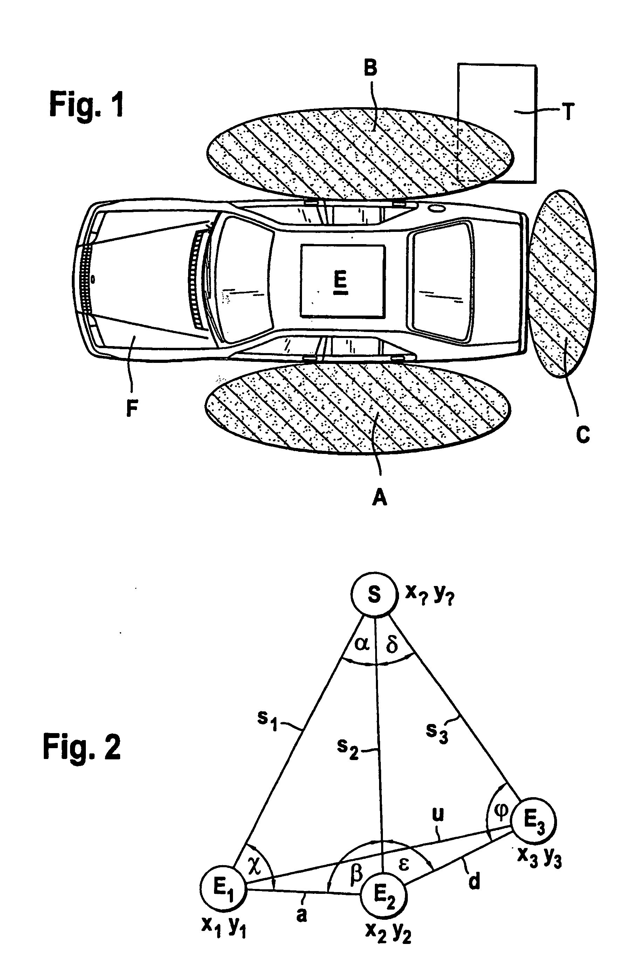

Bei einem solchen beispielhaft in der beiliegenden Figur 1 dargestellten Zugangsberechtigungskontrollsystem sind vorbestimmte Detektionsbereiche A, B und C, in denen sich ein Transponder T befinden muss, in der Regel seitlich rechts und links und am Heck des Fahrzeugs F sowie im gesamten Innenbereich des Fahrzeugs vorgesehen. Die Festlegung dieser Detektionsbereiche A, B und C erfolgt durch die Gestaltung der Antennencharakteristik von am Fahrzeug angebrachten Antennen, die mit einer Sende/-Empfangseinheit E verbunden sind, sowie durch die Abgabe/Aufnahme der Sende-/Empfangsleistung des Transponders und der Fahrzeugantennen. Nachteiligerweise sind hierzu aufwendige, große und teuere Fahrzeugantennen notwendig. Die Leistungsabgabe des Transponders T kann außerdem abhängig von der Temperatur und der aktuellen Batteriespannung des Transponders schwanken.

Des weiteren muss ein großer Aufwand in die Abwehr von Transponderattacken gegen unberechtigten Zugang in das Fahrzeug gelegt werden.

Eine aus der DE 198 02 526 A (Robert Bosch GmbH) bekannte Vorrichtung zur Kontrolle der Zugangsberechtigung sieht eine Zeitermittlung vor, die eine Zeitspanne ermittelt, die, beginnend mit dem Senden der Kennungsaufforderung bis zum Empfang des Antwortsignals verstreicht. Die ermittelte Zeitspanne wird mit einem Grenzwert verglichen und die Zugangsberechtigung nur dann ermöglicht, wenn diese Zeitspanne kleiner als der Grenzwert ist.

Aufgabe und Vorteile der Erfindung

Es ist Aufgabe der Erfindung, die Verwendung großer und teuerer Fahrzeugantennen eines solchen Zugangsberechtigungskontrollsystems zu vermeiden, die Antennenstruktur zu vereinfachen und zu verbilligen, die Systemsicherheit zu verbessern und die Möglichkeit einer Transponderattacke zu eliminieren.

Die obige Aufgabe wird gemäß einem wesentlichen Aspekt der Erfindung dadurch gelöst, dass die Berechnungs-/Auswertemittel eine auf einem Laufzeitunterschied und auf einer Phasenauswertung beruhende Positionsbestimmung ausführen wobei sie eine Phasendifferenz der auf die Aussendung der Kennungsaufforderung an den mehreren Sende-/Empfangsantennen empfangenen Kennungsantworten ermitteln.

Durch das im erfindungsgemäßen Zugangsberechtigungskontrollsystem durchgeführte Zeit- und Phasenmessverfahren vereinfachen und verbilligen sich die Antennenstrukturen, wird eine höhere Sendeleistung des Transponders ermöglicht und gleichzeitig eine Transponderattacke unmöglich gemacht. Damit lassen sich nicht autorisierte Personen mit Übertragungsanlage abwehren.

In Europa ist für die Verwendung von Transpondern, z.B. für Fahrzeug-Key-Systeme ein Frequenzband bei 433 MHz und in den Vereinigten Staaten bei 350 MHz postalisch freigegeben. Die in der Erfindung benötigten Sende-/Empfangsantennen können für diese Frequenzen als Monopole ausgeführt werden. Dies sind lineare Antennen mit Massebezug auf einer Seite, die z.B. rechts und links in der Heckscheibe und auf einer Seite in der Frontscheibe angebracht sein können. Ihre Länge beträgt für den europäischen Markt ca. 17 cm bzw. in den Vereinigten Staaten ca. 24 cm.

Um die Antennen zu verkleinern und die postalisch zugelassene Bandbreite zu erhöhen, kann bei dem in dem erfindungsgemäßen System die Frequenz erhöht werden. Hier sind freigegebene ISM-Frequenzbänder bei 1,25 GHz und 2, 4 GHz zu bevorzugen.

Erfindungsgemäß können zwei oder, was die Systemsicherheit noch steigert, drei Sende-/Empfangsantennen am Fahrzeug vorgesehen sein.

Die Berechnungs- und Auswertemittel der Sende-/Empfangseinheit sind dafür eingerichtet, einen Laufzeitunterschied zwischen dem Absenden einer Kennungsaufforderung von einer Sende-/Empfangsantenne und der Detektion des Empfangs des Empfangs der daraufhin von der Transpondereinheit ausgesendeten Kennungsantwort an wenigstens zwei Sende-/Empfangsantennen zu messen. Mit diesem gemessenen Laufzeitunterschied lässt sich durch das erfindungsgemäß vorgeschlagene mathematisch-geometrische Verfahren die Transponderposition bezogen auf einen eindeutig festgelegten Fahrzeugnullpunkt ermitteln. Dabei können interne Signallaufzeiten, die zur Aufarbeitung der von der Sende-/Empfangseinheit von den verschiedenen Sende-/Empfangsantennen empfangenen Kennungsantwort als konstant und jeweils gleich lang angenommen werden. Ebenfalls kann die transponderinterne Laufzeit vom Empfang der Kennungsaufforderung bis zum Aussenden der Kennungsantwort als konstant angenommen werden.

Die Genauigkeit bzw. Auflösung bei der Positionsbestimmung lässt sich noch verbessern, wenn die Berechnungs- und Auswertemittel außer der auf dem Laufzeitunterschied beruhenden Positionsbestimmung zusätzlich eine auf einer Phasenauswertung beruhende Positionsbestimmung ausführen. Dabei wird die Phasendifferenz der an den mehreren Sende-/Empfangsantennen auf das Aussenden der Kennungsaufforderung empfangenen Kennungsantwort ermittelt. Die Phasenmessung ist insbesondere bei Frequenzen im unteren Megahertzbereich vorteilhaft einsetzbar, da hier die Wellenlänge $\lambda$ entsprechend groß ist. Dann kann vorteilhafterweise auf eine hochgenaue Zeitmessung verzichtet werden.

Eine sehr vorteilhafte Auswirkung des Zeitmessverfahrens ist, dass die elektromagnetischen Wellen in 1 ns 30 cm Strecke bzw. 15 cm Entfernung innerhalb der Atmosphäre zurücklegen. Ist die gemessene Laufzeit größer als eine vorbestimmte maximale Zeit, die sich aus der Laufzeit für die Entfernung und den internen Laufzeiten zusammensetzt, so wird der Zugang zum Fahrzeug verweigert.

Zeichnung

Die nachstehende Beschreibung erläutert ein Ausführungsbeispiel der Erfindung anhand der Zeichnungsfiguren, die zeigen:

Figur 1 schematisch Detektionsbereiche außerhalb eines Fahrzeugs für die Erfassung der Position eines Transponders, wie sie bereits erläutert wurden und

Figur 2 graphisch ein Modell des in der Erfindung vorgeschlagenen von den Berechnungs- und Auswertemitteln ausgeführten mathematisch-geometrischen Positionsermittlungsverfahrens.

Bei einem erfindungsgemäßen Ausführungsbeispiel sind drei Fahrzeugantennen $E_1$, $E_2$ und $E_3$ mit einer Sende-/Empfangseinheit E verbunden. Es sei erwähnt, dass, obwohl das nachstehend beschriebene Ausführungsbeispiel drei Sende-/Empfangsantennen verwendet, ein erfindungsgemäßes Zugangsberechtigungskontrollsystem auch mit zwei Antennen ausgeführt sein kann, die z. B. in der Heckscheibe und in einer Seitenscheibe liegen können.

Nun wird für die nachfolgende Beschreibung Bezug auf die ein Modell der mathematisch-geometrischen Positionsermittlungsmethode darstellenden Grafik in Figur 2 genommen.

Befindet sich ein Transponder T an einer Position S im Empfangsbereich der Antennen $E_1$, $E_2$, $E_3$, so wird innerhalb des Zugangsberechtigungskontrollsystems eine bidirektionale Kommunikation zwischen der Sende-/Empfangseinheit E und der Transpondereinheit T aufgebaut. Innerhalb dieser Kommunikation sendet das Fahrzeug von einer Antenne- $E_1$ oder $E_2$ oder $E_3$ an den Transponder T eine Kennungsaufforderung zum sofortigen Antworten. Die Zeit zwischen Absenden und Empfang der Kennungsaufforderung wird von einer in der Sende-/Empfangseinheit E vorgesehenen (in der Zeichnung nicht gezeigten) Berechnungs-/-Auswertevorrichtung gemessen. Die Zeit, die der Transponder T für die Abarbeitung des Befehls benötigt, ist konstant und dem System bekannt. Des weiteren ist dem System die interne Laufzeit in der Sende-/Empfangseinheit z. B. zum Aufarbeiten und Absenden der Kennungsaufforderung, für den Empfang und die Verstärkung des Signals, für die Übertragung über die Antennenleitung usw. bekannt. Die internen Laufzeiten in dem kraftfahrzeugbasierten Systemteil sind ebenfalls mit guter Näherung konstant.

Die Zeit zwischen der Absendung der Kennungsaufforderung und dem Empfang der Transponderantwort setzt sich somit aus folgenden Zeiten zusammen:

$t_{FAA1}$ -     Fahrzeuginterne Zeitaufbereitung und Absendung der Kennungsaufforderung, z. B. über Antenne E1,

$t_{s1}$ -     Laufzeit zwischen Fahrzeugantennte E1 und Transponder T,

$t_T$ -     Bearbeitungszeit innerhalb des Transponders T,

$t_{s1}$ -     Laufzeit zwischen Transponder T und Fahrzeugantenne E1 und

$t_{FEA1}$ -     Laufzeit zur Aufarbeitung des Empfangs von Antenne E1 am Fahrzeug.

$$t_m = T_{FAA1} + 2t_{s1} + t_T + t_{FEA1} \qquad \text{mit} \qquad t_{FAA1}, t_T, t_{FEA1} = \text{const} \qquad\qquad (1)$$

Die relevante Zeit $t_1$ ist die Messzeit $t_m$ gemäß Gleichung 1 abzüglich der konstanten Laufzeitanteile. Somit gilt:

$$2 * S_1 = C * t_1 \qquad\qquad (2)$$

Für den Empfang über die Antennen $E_2$ und $E_3$ gilt analog:

$$2*S_2=C*t_2=C*(t_1+\Delta t_{21}) \qquad \text{mit} \qquad t_2 = t_1+\Delta t_{21} \qquad\qquad (3)$$

und

$$2*S_3=C*t_3=C*(t_1+\Delta t_{31}) \qquad \text{mit} \qquad t_3 = t_1+\Delta t_{31} \qquad\qquad (4)$$

In den oben angeführten Gleichungen (1) bis (3) wird angenommen, dass die Laufzeiten in der Sende-/Empfangseinheit E zur Aufarbeitung des Empfangs von der Antenne $E_1$ gleich den entsprechenden Laufzeiten für die Aufarbeitung des Empfangs von den Antennen $E_2$ oder $E_3$ sind. Ist dies nicht der Fall, so müssen die Zeiten gemessen und entsprechend dem obigen Ansatz angepasst werden. Sie sind jedoch, wie die Laufzeit über die Antenne $E_1$, als konstant anzunehmen.

In dem die geometrischen Verhältnisse veranschaulichenden graphischen Modell der Figur 2 stellen $E_1$, $E_2$ und $E_3$ die Antennen mit ihren jeweiligen Positionen $X_1$, $Y_2$; $X_2$, $Y_2$ und $X_3$, $Y_3$ am Fahrzeug und S den Ort des Transponders T dar, dessen Position $X_?$, $Y_?$ ermittelt werden soll.

Die Strecken zwischen den Antennen $E_1$, $E_2$ und $E_3$ sind jeweils mit a, d und u bezeichnet. Die Strecken von den Antennen $E_1$, $E_2$ und $E_3$ zum Ort S des Transponders T sind mit $S_1$, $S_2$ und $S_3$ bezeichnet.

Ferner sind die Winkel des Dreiecks $E_1SE_2$ mit $\chi$, $\alpha$ und $\beta$ und die Winkel des Dreiecks $E_2SE_3$ jeweils mit $\varepsilon$, $\delta$ und $\varphi$ bezeichnet.

Am Beispiel des Winkels $\chi$ gelten nach dem Kosinussatz folgende Bedingungen:

$$\cos_\chi = \frac{a^2 + S_1^2 - S_2^2}{2 * a * S_1} \qquad\qquad (5)$$

$$\cos_\chi = \frac{a}{c * t_1}\ \frac{c}{4 * a} * (2 * \Delta t_{21} + \frac{\Delta t_{21}}{t_1}) \qquad\qquad (6)$$

und

$$S_2^2 = a^2 + S_1^2 - 2 * a * S_1 * \cos\chi \qquad\qquad (7)$$

Gleichartige Beziehungen lassen sich für die anderen Winkel aufstellen.

Zur Verbesserung der Auflösung bzw. zur Reduzierung der benötigten Bandbreite kann die Berechnungs-/Auswertevorrichtung zusätzlich zu der oben beschriebenen Längenbestimmung über die Antwortzeit noch eine Phasenauswertung durchführen. Dies ist insbesondere bei Frequenzen im unteren MHz-Bereich vorteilhaft, da hier die Wellenlängen $\lambda$ entsprechend lang ist. Ein weiterer Vorteil dabei ist der mögliche Verzicht auf eine hochgenaue Zeitmessung. Es gilt:

$$\lambda = \frac{1}{f}$$

$$\omega = 2\pi f \qquad \varphi(t) = \omega t + \Delta\varphi$$

$$\varphi 1(t) = 0, \qquad \varphi_2(t) = \omega t + \Delta\varphi_{21}, \qquad \varphi_3(t) = \omega t + \Delta\varphi_{31} \qquad (8)$$

Eine sehr vorteilhafte Auswirkung des Zeitmessverfahrens ist, dass elektromagnetische Wellen in der Atmosphäre in einer Nanosekunde 30 cm Strecke bzw. 15 cm Entfernung zurücklegen. Ist die Messzeit größer als eine eingestellte Maximalzeit, die sich aus der Laufzeit für die Entfernung zwischen Fahrzeug und Transponder und den internen Laufzeiten zusammensetzt, so wird Zugang zum Fahrzeug verweigert.

Somit bietet das erfindungsgemäße Zugangsberechtigungskontrollsystem neben einer einfacheren Antennenstruktur den Vorteil, dass eine verhältnismäßig hohe Sendeleistung verwendet werden kann. Ein weiterer Vorteil entsteht dadurch, dass eine Transponderattacke nicht mehr erfolgreich möglich ist, da mit der Übertragung durch eine zwischengeschaltete Übertragungsstätte die Zeit für die Kennungsantwort entsprechend der maximalen Entfernung für das Entriegeln des Fahrzeugs überschritten wird.

## Patentansprüche

1. System zur Kontrolle der Zugangsberechtigung zu einem Fahrzeug (F) mit einer fahrzeugbasierten Sende-/Empfangseinheit (E), die mindestens zwei voneinander beabstandete Sende-/Empfangsantennen ($E_1$, $E_2$, $E_3$) am oder im Fahrzeug (F) aufweist, und mit einer Transpondereinheit (T), die zur Detektion ihres Vorhandenseins und zum Austausch einer vorbestimmten Kennungsaufforderung/Antwortsequenz durch die bzw. mit der Sende-/Empfangseinheit (E) innerhalb eines vorbestimmten Detektionsbereichs in dem bzw. um das Fahrzeug (F) eingerichtet ist, wobei die Sende-/Empfangseinheit (E) Berechnungs-/Auswertemittel aufweist, die die Detektion einer Position der Transpondereinheit (T) mittels eines mäthematisch-geometrischen Verfahrens in Reaktion auf ein von den mindestens zwei Sende-/Empfangsantennen ($E_1$, $E_2$, $E_3$) auf die Kennungsaufforderung hin empfangenen, von der Transpondereinheit (T) ausgesendeteten Antwortsignal durchführen, **dadurch gekennzeichnet, dass** die Berechnungs-/Auswertemittel eine auf einem Laufzeitunterschied und auf einer Phasenauswertung beruhende Positionsbestimmung ausführen wobei sie eine Phasendifferenz der auf die Aussendung der Kennungsaufforderung an den mehreren Sende-/Empfangsantennen empfangenen Kennungsantworten ermitteln.

2. System nach Anspruch 1, **dadurch gekennzeichnet, dass** drei Monopol-Sende-/Empfangsantennen (E1, E2, E3) jeweils an den beiden Fahrzeugseiten und am Fahrzeugheck vorgesehen sind.

3. System nach Anspruch 1 oder 2, **dadurch gekennzeichnet, dass** die Berechnungs-/Auswertemittel Laufzeitunterschiede zwischen dem Absenden einer Kennungsaufforderung von einer der Sende-/Empfangsantennen (E1, E2, E3) und der Detektion der daraufhin von der Transpondereinheit ausgesendeten Kennungsantwort auf den Empfang derselben an wenigstens zwei der Sende-/Empfangsantennen ($E_1$, $E_2$, $E_3$) ermitteln, und die Transponderposition aus dem ermittelten Laufzeitunterschied und bekannten Positionskoordinaten der mindestens zwei Sende-/Empfangsantennen bezogen auf einen festgelegten Fahrzeugnullpunkt bestimmen.

4. System nach Anspruch 3, **dadurch gekennzeichnet, dass** die Berechnungs-/Auswertemittel bei der Positionsermittlung die internen Signallaufzeiten bei der Aufarbeitung der von den Sende-/Empfangsantennen empfangenen Kennungsantworten als konstant und jeweils gleich lang annehmen.

5. System nach Anspruch 4, **dadurch gekennzeichnet, dass** die Berechnungs-/Auswertemittel die auf dem Laufzeitunterschied beruhenen Positionsmessergebnisse mit den auf der Messung der Phasendifferenz beruhenden Positionsmessergebnissen zur Erhöhung der Auflösung verbinden.

6. System nach einem der vorangehenden Ansprüche, **dadurch gekennzeichnet, dass** das System den Zugang zum Fahrzeug verweigert, wenn die von der Berechnungs-/Auswerteeinheit ermittelte Signallaufzeit größer als eine vorbestimmte Maximalzeit ist.

## Claims

1. System for controlling access authorization to a vehicle (F) having a vehicle-based transceiver unit (E) which has at least two transceiver antennas ($E_1$, $E_2$, $E_3$), spaced apart from one another, on or in the vehicle (F), and having a transponder unit (T) which is configured to detect their presence and to exchange a predetermined identifier request/response sequence by the or with the transceiver unit (E) within a predetermined detection range in or around the vehicle (F) wherein the transceiver unit (E) has calculation/evaluation means which carry out the detection of a position of the transponder unit (T) by means of a mathematical-geometric method in reaction to a response signal which is received by the at least two transceiver antennas ($E_1$, $E_2$, $E_3$) in response to the identifier request and is emitted by the transponder unit (T), **characterized in that** the calculation/evaluation means carry out a position determining process which is based on a difference in transit time and on a phase evaluation, wherein they acquire a phase difference between the identifier responses which are received in response to the emission of the identifier request at the plurality of transceiver antennas.

2. System according to Claim 1, **characterized in that** three monopole transceiver antennas ($E_1$, $E_2$, $E_3$) are each provided on the two sides of the vehicle and at the rear of the vehicle.

3. System according to Claim 1 or 2, **characterized in that** the calculation/evaluation means determine transit time differences between the emission of an identifier request by one of the transceiver antennas ($E_1$, $E_2$, $E_3$) and the detection of the identifier response which is subsequently emitted by the transponder unit in response to the reception of said identifier response at at least two of the transceiver antennas ($E_1$, $E_2$, $E_3$), and determine the position of the transponder from the acquired difference in transit time and known position coordinates of the at least two transceiver antennas with respect to a defined zero point of the vehicle.

4. System according to Claim 3, **characterized in that** during the position acquisition process the calculation/evaluation means assume that the internal signal transit times during the processing of the identifier responses received by the transceiver antennas are constant and each of identical length.

5. System according to Claim 4, **characterized in that** the calculation/evaluation means connect the position measurement results which are based on the transit time difference to the position measurement results which are based on the measurement of the phase difference, in order to increase the resolution.

6. System according to one of the preceding claims, **characterized in that** the system denies access to the vehicle if the signal transit time which is acquired by the calculation/evaluation unit is longer than a predetermined maximum time.


**Revendications**

1. Système de contrôle de l'autorisation d'accès à un véhicule (F), comprenant une unité d'émission/réception basée sur le véhicule (E), et qui présente au moins deux antennes d'émission/réception ($E_1$, $E_2$, $E_3$) écartées l'une de l'autre sur ou dans le véhicule (F), et comprenant un transpondeur (T) conçu pour détecter sa présence et pour échanger une demande d'identification/séquence de réponse prédéterminée, par ou à l'aide de l'unité d'émission/réception (E), à l'intérieur d'une zone de détection prédéterminée dans le véhicule (F) ou autour de celui-ci, l'unité d'émission/réception (E) présentant des moyens de calcul/exploitation qui réalisent la détection d'une position du transpondeur (T) au moyen d'un procédé mathématico-géométrique en réaction à un signal de réponse à la demande d'identification, envoyé par le transpondeur (T) et reçu par au moins deux antennes d'émission/réception ($E_1$, $E_2$, $E_3$),
**caractérisé en ce que**
les moyens de calcul/exploitation réalisent une détermination de position reposant sur une différence de durée et sur une exploitation de phase, et déterminent une différence de phase des réponses d'identification reçues lors de l'envoi de la demande d'identification, au niveau des nombreuses antennes d'émission/réception.

2. Système selon la revendication 1,
**caractérisé en ce que**
trois antennes d'émission/réception monopôle (E1, E2, E3) sont prévues sur les deux côtés du véhicule et à l'arrière du véhicule.

3. Système selon la revendication 1 ou 2,
**caractérisé en ce que**
les moyens de calcul/d'exploitation déterminent des différences de durée entre l'émission d'une demande d'identification par l'une des antennes d'émission/réception (E1, E2, E3) et la détection du mot d'identification émis après en réponse par le transpondeur lors de la réception de celle-ci au niveau d'au moins deux antennes d'émission/

réception (E$_1$, E$_2$, E$_3$), et déterminent la position du transpondeur à partir de la différence de durée déterminée et des coordonnées de position connues d'au moins deux antennes d'émission/réception par rapport à un point zéro fixe du véhicule.

4. Système selon la revendication 3.
   **caractérisé en ce que**
   les moyens de calcul/d'exploitation, lors de la détermination de position, considèrent les durées de signal intemes, lors du traitement des réponses d'identification reçues par les antennes d'émission/réception, comme constantes et à chaque fois identiques.

5. Système selon la revendication 4,
   **caractérisé en ce que**
   les moyens de calcul/d'exploitation relient les résultats de la mesure de position reposant sur la différence de durée avec les résultats de la mesure de position reposant sur la mesure de la différence de phase, afin d'augmenter la résolution.

6. Système selon l'une des revendications précédentes,
   **caractérisé en ce que**
   le système interdit l'accès au véhicule lorsque la durée de signal déterminée par l'unité de calcul/ exploitation est supérieure à un temps maximal prédéterminé.

Fig. 1

Fig. 2